# EUROPEAN PATENT APPLICATION

(11) **EP 4 797 115 A1**
(43) Date of publication of application: **26.08.2026**
(21) Application number: 24887362.2
(22) Date of filing: 29.05.2024
(51) Int. Cl.: G06F 16/242, G06F 16/2455

(54) **DATABASE QUERY OPTIMIZATION METHOD AND APPARATUS, AND COMPUTING DEVICE CLUSTER**

(30) Priority: 10.11.2023 CN 202311503166
(71) Applicant: HUAWEI TECHNOLOGIES CO., LTD., Shenzhen 518129 (CN)
(72) Inventor: ZHANG, Chi, Shenzhen, Guangdong 518129 (CN); XIA, Longchao, Shenzhen, Guangdong 518129 (CN); QI, Yunhao, Shenzhen, Guangdong 518129 (CN)
(74) Representative: Thun, Clemens
(86) International application number: PCT/CN2024/096114
(87) International publication number: WO 2025/097738

(57) **Abstract**

A database query optimization method includes: obtaining a query statement, where the query statement includes a join operation and a group aggregation operation; determining that a join key and a grouping key in the query statement are the same, an aggregate function in the query statement is splittable, and an input parameter of the aggregate function is from a same side of a join condition in the query statement; creating a fusion operator, where the fusion operator is used to complete the join operation and the group aggregation operation; when a cost of executing the fusion operator is less than or equal to a target cost, generating, based on the fusion operator, an optimal execution plan related to the fusion operator, where the target cost is a cost of executing a join operator and a group aggregation operator; and performing operations step by step based on operation sequences in the optimal execution plan to obtain a query result set. In this way, when the query statement satisfies a corresponding feature, the join operation and the group aggregation operation may be combined into one operator, to reduce intermediate result processing flows, accelerate execution of the query statement, and improve query execution performance.

## Description

This application claims priority to Chinese Patent Application No. 202311503166.0, filed with the China National Intellectual Property Administration on November 10, 2023 and entitled "DATABASE QUERY OPTIMIZATION METHOD AND APPARATUS, AND COMPUTE DEVICE CLUSTER", which is incorporated herein by reference in its entirety.

### TECHNICAL FIELD

This application relates to the information technology (information technology, IT) field, and in particular, to a database query optimization method and apparatus, and a compute device cluster.

### BACKGROUND

In a database management system (database management system, DBMS), for a given structured query language (structured query language, SQL) query statement, a query optimizer in the DBMS may perform query rewriting (also referred to as query conversion) on the SQL statement according to a predefined rule (rule), to generate query statements equivalent to the initial SQL statement. Then the query optimizer may assess the cost (cost) of the equivalent statements, and generate an optimal execution plan based on an equivalent query statement with a lowest cost. However, some redundant calculations often occur in the optimal execution plan, wasting performance and reducing execution efficiency.

### SUMMARY

This application provides a database query optimization method and apparatus, a compute device cluster, a computer storage medium, and a computer product, to improve query execution performance.

According to a first aspect, this application provides a database query optimization method, including: obtaining a query statement, where the query statement includes a join operation and a group aggregation operation; determining that a join key and a grouping key in the query statement are the same, an aggregate function in the query statement is splittable for calculation, and an input parameter of the aggregate function is from a same side of a join condition in the query statement; creating a fusion operator, where the fusion operator is used to complete the join operation and the group aggregation operation; when a cost of executing the fusion operator is less than or equal to a target cost, generating, based on the fusion operator, an optimal execution plan related to the fusion operator, where the target cost is a cost of executing a join operator and a group aggregation operator, the join operator is used to complete the join operation, and the group aggregation operator is used to complete the group aggregation operation; and performing operations step by step based on operation sequences in the optimal execution plan to obtain a query result set.

In this way, when the query statement satisfies a corresponding feature, the join operation and the group aggregation operation may be combined into one operator, to reduce intermediate result processing flows, accelerate execution of the query statement, and improve query execution performance. In addition, compared with a single operator, the fusion operator may use fewer memory and CPU resources, to reduce memory overheads and usage of CPU resources.

In a possible implementation, performing the operations step by step based on the operation sequences in the optimal execution plan to obtain the query result set includes: building an ordered memory index by using a table on a first side in the join operation as a build-side table, where the ordered memory index includes a search key value, a key value count, a match flag, and an aggregate function value, the search key value is a join key value in the build-side table, the key value count is a quantity of times that the search key value appears in the build-side table, the match flag is used to identify whether the search key value successfully matches a join key value in a probe-side table, the probe-side table is a table on a second side in the join operation, the aggregate function value is a value obtained through calculation of the aggregate function in the query statement, and the aggregate function value includes an aggregate function value related to the build-side table and/or an aggregate function value related to the probe-side table; probing the ordered memory index by using the join key value in the probe-side table, and updating, in the ordered memory index based on a probe result, the aggregate function value related to the probe-side table and the match identifier; and selecting the query result set from the ordered memory index based on a join type in the query statement. In this way, both join matching and the group aggregation operation can be implemented by using the ordered memory index, to improve execution performance. In addition, during execution of the operation sequences, alternatively, only the build-side table may be sorted, to reduce a quantity of times of sorting. In addition, all of the operation sequences use a same physical data structure (namely, the ordered memory index). Therefore, temporal and spatial locality during execution of the fusion operator is better, and execution efficiency is higher.

In a possible implementation, building the ordered memory index by using the table on the first side in the join operation as the build-side table includes: building a data record for each join key value in the build-side table, where the data record includes the search key value, an initial value of the aggregate function value, the key value count, and an initial value of the match flag; and inserting the built data record into the ordered memory index to build the ordered memory index, where when a first data record and a second data record that are inserted into the ordered memory index are the same, the first data record or the second data record is retained, key value counts in the first data record and the second data record are accumulated, and when the input parameter of the aggregate function in the query statement is from the build-side table, an aggregate function value related to the first data record or the second data record is updated. In this way, the ordered memory index can be built.

In a possible implementation, inserting the built data record into the ordered memory index includes: sorting data records based on search key values in the data records, and sequentially inserting the data records into the ordered memory index based on a sort result; or inserting data records into the ordered memory index, and sorting the data records in the ordered memory index based on search key values in the data records. In this way, data in the ordered memory index can be sorted.

In a possible implementation, probing the ordered memory index by using the join key value in the probe-side table includes: performing matching between a join key value in a first record in the probe-side table and the search key value in the ordered memory index, where the first record is any record in the probe-side table; and updating, in the ordered memory index based on the probe result, the aggregate function value related to the probe-side table and the match identifier includes: when the join key value in the first record matches a first search key value in the ordered memory index, updating, in the ordered memory index, a match identifier related to the first search key value, and updating, based on a key value count related to the first search key value, an aggregate function value related to the first search key value and the join key value in the first record; or when the join key value in the first record does not match the first search key value in the ordered memory index, performing matching between a join key value in any remaining record in the probe-side table and the search key value in the ordered memory index. In this way, both join matching and the group aggregation operation are implemented by using one ordered memory index, to improve execution performance.

In a possible implementation, before probing the ordered memory index by using any join key value in the probe-side table, the method further includes: generating a target range condition based on a range of the search key value in the ordered memory index and the join condition in the query statement, where the target range condition indicates a range of the join key value in the probe-side table; and determining that the any join key value meets the target range condition, where when the any join key value does not meet the target range condition, the any join key value is no longer used to probe the ordered memory index. In this way, data can be filtered before the ordered memory index is probed, to avoid unnecessary probing and improve execution performance.

In a possible implementation, both the build-side table and the probe-side table may be base tables or derived tables (for example, intermediate results in a view or a query process).

In a possible implementation, the query statement further includes a sort operation. In this case, the fusion operator is further used to complete the sort operation.

In a possible implementation, the join condition is used for an equi-join, or a non-equi join, or an equi-join and a non-equi join.

According to a second aspect, this application provides a database query optimization apparatus, including an obtaining module and a processing module. The obtaining module is configured to obtain a query statement, where the query statement includes a join operation and a group aggregation operation. The processing module is configured to determine that a join key and a grouping key in the query statement are the same, an aggregate function in the query statement is splittable for calculation, and an input parameter of the aggregate function is from a same side of a join condition in the query statement. The processing module is further configured to: create a fusion operator, where the fusion operator is used to complete the join operation and the group aggregation operation; and when a cost of executing the fusion operator is less than or equal to a target cost, generate, based on the fusion operator, an optimal execution plan related to the fusion operator, where the target cost is a cost of executing a join operator and a group aggregation operator, the join operator is used to complete the join operation, and the group aggregation operator is used to complete the group aggregation operation. In addition, the processing module is further configured to perform operations step by step based on operation sequences in the optimal execution plan to obtain a query result set.

In a possible implementation, when performing the operations step by step based on the operation sequences in the optimal execution plan to obtain the query result set, the processing module is specifically configured to: build an ordered memory index by using a table on a first side in the join operation as a build-side table, where the ordered memory index includes a search key value, a key value count, a match flag, and an aggregate function value, the search key value is a join key value in the build-side table, the key value count is a quantity of times that the search key value appears in the build-side table, the match flag is used to identify whether the search key value successfully matches a join key value in a probe-side table, the probe-side table is a table on a second side in the join operation, the aggregate function value is a value obtained through calculation of the aggregate function in the query statement, and the aggregate function value includes an aggregate function value related to the build-side table and/or an aggregate function value related to the probe-side table; probe the ordered memory index by using the join key value in the probe-side table, and update, in the ordered memory index based on a probe result, the aggregate function value related to the probe-side table and the match identifier; and select the query result set from the ordered memory index based on a join type in the query statement.

In a possible implementation, when building the ordered memory index by using the table on the first side in the join operation as the build-side table, the processing module is specifically configured to: build a data record for each join key value in the build-side table, where the data record includes the search key value, an initial value of the aggregate function value, the key value count, and an initial value of the match flag; and insert the built data record into the ordered memory index to build the ordered memory index, where when a first data record and a second data record that are inserted into the ordered memory index are the same, the first data record or the second data record is retained, key value counts in the first data record and the second data record are accumulated, and when the input parameter of the aggregate function in the query statement is from the build-side table, an aggregate function value related to the first data record or the second data record is updated.

In a possible implementation, when inserting the built data record into the ordered memory index, the processing module is specifically configured to: sort data records based on search key values in the data records, and sequentially insert the data records into the ordered memory index based on a sort result; or insert data records into the ordered memory index, and sort the data records in the ordered memory index based on search key values in the data records.

In a possible implementation, when probing the ordered memory index by using the join key value in the probe-side table, the processing module is specifically configured to perform matching between a join key value in a first record in the probe-side table and the search key value in the ordered memory index, where the first record is any record in the probe-side table. In this case, updating, in the ordered memory index based on the probe result, the aggregate function value related to the probe-side table and the match identifier includes: when the join key value in the first record matches a first search key value in the ordered memory index, updating, in the ordered memory index, a match identifier related to the first search key value, and updating, based on a key value count related to the first search key value, an aggregate function value related to the first search key value and the join key value in the first record; or when the join key value in the first record does not match the first search key value in the ordered memory index, performing matching between a join key value in any remaining record in the probe-side table and the search key value in the ordered memory index.

In a possible implementation, before probing the ordered memory index by using any join key value in the probe-side table, the processing module is further configured to: generate a target range condition based on a range of the search key value in the ordered memory index and the join condition in the query statement, where the target range condition indicates a range of the join key value in the probe-side table; and determine that the any join key value meets the target range condition, where when the any join key value does not meet the target range condition, the any join key value is no longer used to probe the ordered memory index.

In a possible implementation, both the build-side table and the probe-side table may be base tables or derived tables (for example, intermediate results in a view or a query process).

In a possible implementation, the query statement further includes a sort operation. In this case, the fusion operator is further used to complete the sort operation.

In a possible implementation, the join condition is used for an equi-join, or a non-equi join, or an equi-join and a non-equi join.

According to a third aspect, this application provides a compute device cluster, including at least one compute device. Each compute device includes a processor and a memory. A processor of the at least one compute device is configured to execute instructions stored in a memory of the at least one compute device, to enable the compute device cluster to perform the method described in any one of the first aspect or the possible implementations of the first aspect.

According to a fourth aspect, this application provides a computer-readable storage medium, including computer program instructions. When the computer program instructions are executed by a compute device cluster, the compute device cluster performs the method described in any one of the first aspect or the possible implementations of the first aspect, or performs the method described in any one of the second aspect or the possible implementations of the second aspect. The compute device cluster may include one or more compute devices.

According to a fifth aspect, this application provides a computer program product including instructions. When the instructions are run by a compute device cluster, the compute device cluster is enabled to perform the method described in any one of the first aspect or the possible implementations of the first aspect. The compute device cluster may include one or more compute devices.

It can be understood that, for beneficial effects of the second aspect to the fifth aspect, reference may be made to related descriptions in the first aspect. Details are not described herein again.

### BRIEF DESCRIPTION OF DRAWINGS

FIG. 1 is a diagram of a logical architecture of a database management system according to an embodiment of this application;
FIG. 2A and FIG. 2B are a schematic flowchart of a database query optimization method according to an embodiment of this application;
FIG. 3 is a diagram of steps of building an ordered memory index according to an embodiment of this application;
FIG. 4A to FIG. 4H are diagrams of a query execution process of an SQL query statement according to an embodiment of this application;
FIG. 5A to FIG. 5H are diagrams of a query execution process of another SQL query statement according to an embodiment of this application;
FIG. 6A to FIG. 6D are diagrams of a process of building an ordered memory index and generating a range condition according to an embodiment of this application;
FIG. 7 is a diagram of a structure of a database query optimization apparatus according to an embodiment of this application;
FIG. 8 is a diagram of a structure of a compute device according to an embodiment of this application;
FIG. 9 is a diagram of a structure of a compute device cluster according to an embodiment of this application; and
FIG. 10 is a diagram of a structure of another compute device cluster according to an embodiment of this application.

### DESCRIPTION OF EMBODIMENTS

The term "and/or" in this specification describes an association relationship between associated objects, and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

In this specification and the claims, the terms "first", "second", and the like are intended to distinguish between different objects, but not to indicate a specific order of the objects. For example, a first response message, a second response message, and the like are intended to distinguish between different response messages, but not to indicate a specific order of the response messages.

In embodiments of this application, the term "in an example", "for example", or the like is used to give an example, an illustration, or a description. Any embodiment or design scheme described with "in an example" or "for example" in embodiments of this application should not be construed as being more preferred or advantageous than another embodiment or design scheme. To be precise, the term "in an example", "for example", or the like is intended to present a related concept in a specific manner.

In descriptions of embodiments of this application, unless otherwise specified, "a plurality of" means two or more. For example, a plurality of processing units are two or more processing units, and a plurality of elements are two or more elements.

First, some technical terms in this application are described.

### (1) Query

The query is an operation of retrieving data from a database, and may either obtain data from a single table or obtain data from a plurality of tables through a join operation. The query may be written by using an SQL statement. Through the query, a user can conveniently obtain needed data for data analysis, report generation, decision support, and the like.

### (2) Operator

The operator is also referred to as an execution operator and is used to process data. Operators are classified into a logical operator and a physical operator. The logical operator describes semantics of an operation, but does not include a specific implementation. The physical operator describes a specific execution method. For example, a join (join) operation is a logical operator, and a corresponding hash join (hash join), nested loop join (nested loop join), and sort-merge join (sort-merge join) are physical operators.

### (3) Query optimizer

The query optimizer is an important component of a database management system, and is used to parse, analyze, and optimize an SQL statement and generate an execution plan. An objective of the query optimizer is to find an optimal execution plan to meet a query requirement of a user with minimum time and resource costs. The query optimizer mainly converts a logical operator into a physical operator to generate an efficient execution plan. The physical operator is displayed in the execution plan.

### (4) Execution plan

The execution plan describes specific steps and an execution sequence for a database management system to execute query statements. A basic operation unit in the execution plan is referred to as a (physical) operator, which represents a specific operation, for example, a table scan or a hash join. Operators in the execution plan form a tree structure according to the execution sequence. A root node of the tree is an outermost operator, and a leaf node is an innermost operator.

### (5) Join operation

The join operation is to perform matching between data in two or more tables based on a join conditions to generate a new table. Related information may be queried from a plurality of tables through the join operation. The join operation is usually implemented by using an SQL statement including a keyword, for example, INNER JOIN, LEFT JOIN, or RIGHT JOIN.

### (6) Join condition

The join condition may specify a condition for joining two tables. Usually, some columns in the two tables are compared to join related data rows in the two tables. For example, in a query statement SELECT * FROM t1 INNER JOIN t2 ON t1.c1 = t2.c2, a join condition is t1.c1 = t2.c2. When a value of a column c1 in a table t1 is equal to a value of a column c2 in a table t2, related data rows of t1 and t2 are joined. Join conditions are usually classified into an equi-join and a non-equi join. Only an equal sign is used in the equi-join. A comparison operator, for example, greater than, greater than or equal to, less than, less than or equal to, or not equal to, is used in the non-equi join.

### (7) Join key

The join key is a column or a combination of columns for joining two tables, and may join rows with same or related values in the two tables to generate a join result set. In an SQL query, a JOIN clause is usually used to specify the join key. For example, in a join condition t1.c1 = t2.c2, a join key of a table t1 is c1, and a join key of a table t2 is c2; and in a join condition t1.c1 > t2.c2 AND t1.c3 > t2.c4, a join key of a table t1 is (c1, c3), and a join key of a table t2 is (c2, c4).

### (8) Grouping key

The grouping key is a column or a combination of columns for grouping data. In an SQL query, a GROUP BY clause is usually used to specify the grouping key. The grouping key determines how to divide data into different groups. Each group has a same grouping key value. A group aggregation operation groups data based on the grouping key value, and calculates an aggregate value (for example, a sum, an average value, or a count) of each group.

### (9) Group aggregation

Group aggregation is to classify data based on a specified grouping condition and perform aggregate calculation on data in each group to obtain an aggregation result of each group. The aggregate calculation may include calculating a sum, an average value, a maximum value, a minimum value, or the like. Group aggregation may be used in the fields of data analysis, report generation, and the like, and can help a user quickly understand an overall data status and distribution of each dimension to make a more accurate decision. Group aggregation is usually implemented by using GROUP BY and an aggregate function in an SQL statement.

### (10) Ordered memory index

The ordered memory index indicates that all index data is stored in a memory and the index data is sorted based on search key values. The ordered memory index may be used to handle a point query (point query) and a range query (range query). A query condition of the point query is an equality condition, and a query condition of the range query is an inequality condition.

### (11) Search key

The search key is one or more columns for searching for and locating data in an ordered memory index.

The following describes the technical solutions provided in this application.

Usually, when a query statement includes a join operation and a group aggregation operation, the two operations each are implemented by using a single physical operator in a DBMS. For example, a hash join is used to handle the join operation, and hash group aggregation is used to handle the group aggregation operation. However, in some query statements that include a join operation and a group aggregation operation, when the join and the group aggregation have some features (for example, a join key and a grouping key are the same), separately implementing the operations by using a single operator causes redundancy and a waste of performance.

In view of this, embodiments of this application provide a database query optimization method. For an SQL query statement that includes a join operation and a group aggregation operation, a feature of the query statement may be fully utilized, to avoid redundant calculation, reduce memory overheads, and improve execution efficiency of the query statement.

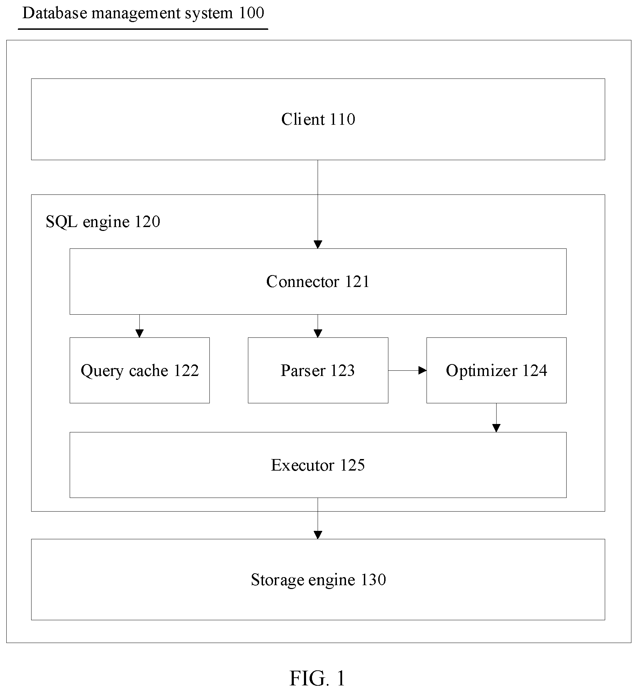

For example, FIG. 1 is a diagram of a logical architecture of a database management system according to an embodiment of this application. As shown in FIG. 1, the database management system 100 may include a client 110, an SQL engine 120, and a storage engine 130. The client 110 is any form of connecting to a database, for example, an activeX data objects (activeX data objects, ADO) connection used in .Net or a Java database connectivity (Java database connectivity, JDBC) connection used in Java.

The SQL engine 120 is mainly responsible for generating, in a current load scenario, an efficient execution plan based on an SQL statement input by the client 110, and running the execution plan. The SQL engine 120 may include a connector 121, a query cache 122, a parser 123, an optimizer 124, and an executor 125. The connector 121 is mainly responsible for communicating with the client 110, and is responsible for service logic processing such as connection authentication, determining a quantity of connections, and connection pool processing. A main function of the query cache 122 is to improve query efficiency. The cache is stored in a form of a hash table with a key and a value, where the key is a specific SQL statement, and the value is a result set. When an SQL statement arrives, if a query cache function is enabled, the SQL engine 120 may preferentially check for matching data in the query cache 122, and if matching data is found, directly return the matching data to the client 110, without parsing the corresponding SQL statement. However, if the SQL statement includes a user-defined function, a stored function, a user variable, a temporary table, or the like, the query cache 122 is not checked. If no matching data is found in the query cache 122, the parser 123 parses the corresponding SQL statement. The parser 123 is mainly responsible for parsing the SQL statement according to a syntax rule or the like, and generating an internally recognizable parse tree. The optimizer 124 is responsible for optimizing the parse tree generated by the parser 123, to find an optimal execution plan. The executor 125 is mainly responsible for: after the optimizer 124 finds the optimal execution plan, invoking, according to the optimal execution plan, an interface of the storage engine 130 to perform a query or another operation, and finally returning a query result set to the client 110.

The storage engine 130 is mainly responsible for data storage, retrieval, and management, and defines important features of a database system in terms of how to organize data, how to execute a query and a transaction, data security and reliability, and the like.

With reference to the database management system 100 shown in FIG. 1, the following describes the database query optimization method provided in embodiments of this application.

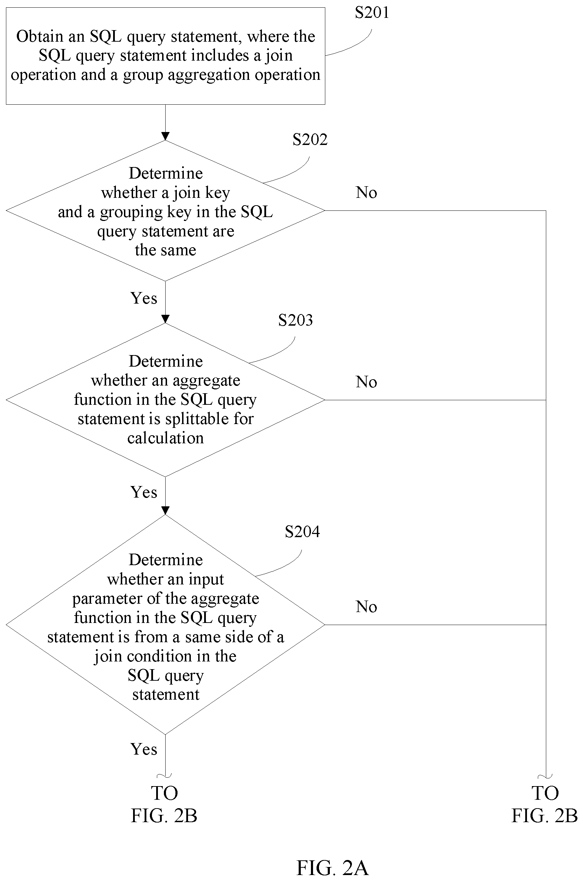

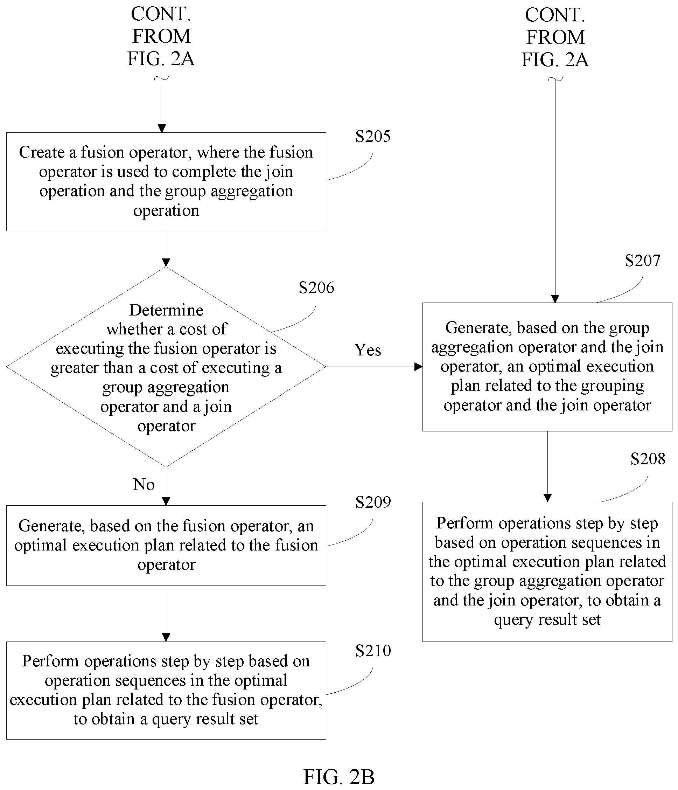

For example, FIG. 2A and FIG. 2B are a schematic flowchart of a database query optimization method according to an embodiment of this application. It can be understood that the method may be performed by any apparatus, device, platform, or device cluster with computing and processing capabilities. As shown in FIG. 2A and FIG. 2B, the database query optimization method may include the following steps.

S201: Obtain an SQL query statement, where the SQL query statement includes a join operation and a group aggregation operation.

In this embodiment, the SQL query statement may be entered by a user, or may be predefined by an application program or a system. This may be specifically determined based on an actual case, and is not limited herein.

S202: Determine whether a join key and a grouping key in the SQL query statement are the same.

In this embodiment, after the SQL query statement is obtained, whether the join key and the grouping key in the query statement are the same may be determined. When the two keys are the same, S203 may be performed; otherwise, S207 is performed. For example, it is assumed that a join condition is t1.x = t2.a. If the grouping key is t1.x or t2.a (that is, GROUP BY t1.x or GROUP BY t2.a), the condition is met. If the grouping key is t1.y or t2.b, the condition is not met. Alternatively, it is assumed that a join condition is t1.x = t2.a AND t1.y > t2.b. If the grouping key is (t1.x, t1.y) or (t2.a, t2.b), the condition is met. For example, the join condition may be used for an equi-join, or a non-equi join, or both an equi-join and a non-equi join.

S203: Determine whether an aggregate function in the SQL query statement is splittable for calculation.

In this embodiment, after the SQL query statement is obtained, whether the aggregate function in the query statement is splittable for calculation may be determined. When the aggregate function is splittable for calculation, S204 may be performed; otherwise, S207 is performed. That the aggregate function is splittable for calculation means that data that needs to be calculated may be split into a plurality of parts, calculation may be first performed on each part of data, and then calculation results are summarized to obtain a final result. For example, when an aggregate function SUM is used to sum up 10 numbers, the 10 numbers may be first split into two parts for separate summation, and then summation results of the two parts are added up to obtain a final result. Common splittable aggregate functions include SUM, AVG, COUNT, MAX, and MIN.

S204: Determine whether an input parameter of the aggregate function in the SQL query statement is from a same side of a join condition in the SQL query statement.

In this embodiment, after the SQL query statement is obtained, whether the input parameter of the aggregate function in the query statement is from a same side of the join condition in the SQL query statement may be determined. When the input parameter is from a same side of the join condition, S205 may be performed; otherwise, S207 is performed. For example, it is assumed that the join condition is t1.x = t2.a. If an input parameter of an aggregate function SUM(t2.c) is from a t2 side (t2 may be a base table or a subquery result), the condition is met. Similarly, an aggregate function SUM(t1.z) also meets the condition. However, input parameters of an aggregate function SUM(t1.z + t2.c) relate to both a t1 side and the t2 side, and therefore the aggregate function SUM(t1.z + t2.c) does not meet the condition.

It should be understood that an execution sequence of S202, S203, and S204 may be selected based on an actual case, and is not limited herein. For example, S202, S203, and S204 may be simultaneously performed in parallel, or may be sequentially performed.

When the SQL query statement meets all of the conditions in S202, S203, and S204, S205 may be performed.

S205: Create a fusion operator, where the fusion operator is used to complete the join operation and the group aggregation operation.

In this embodiment, when the obtained SQL query statement meets all of the conditions in S202, S203, and S204, a fusion operator may be created. The fusion operator may be used to complete the join operation and the group aggregation operation. In this way, the join operation and the group aggregation operation can be completed by using one operator, instead of completing the join operation by using one operator and completing the group aggregation operation by using another operator, so that intermediate result processing flows can be reduced. In addition, compared with a single operator, the fusion operator uses fewer memory and central processing unit (central processing unit, CPU) resources, to reduce memory overheads and usage of CPU resources.

S206: Determine whether a cost of executing the fusion operator is greater than a cost of executing a group aggregation operator and a join operator.

In this embodiment, after the fusion operator is generated, whether the cost of executing the fusion operator is greater than the cost of executing the group aggregation operator and the join operator may be determined. The cost of executing the fusion operator being greater than the cost of executing the group aggregation operator and the join operator indicates that performance cannot be improved by performing the join operation and the group aggregation operation by using the fusion operator. Therefore, S207 may be performed. The cost of executing the fusion operator being not greater than (namely, less than or equal to) the cost of executing the group aggregation operator and the join operator indicates that performance can be improved by performing the join operation and the group aggregation operation by using the fusion operator. Therefore, S209 may be performed.

S207: Generate, based on the group aggregation operator and the join operator, an optimal execution plan related to the group aggregation operator and the join operator.

In this embodiment, when the cost of executing the fusion operator is greater than the cost of executing the group aggregation operator and the join operator, the optimal execution plan related to the group aggregation operator and the join operator may be generated based on the group aggregation operator and the join operator. The optimal execution plan describes operation sequences for executing the obtained SQL query statement.

S208: Perform operations step by step based on the operation sequences in the optimal execution plan related to the group aggregation operator and the join operator, to obtain a query result set.

In this embodiment, after the optimal execution plan related to the group aggregation operator and the join operator is obtained, the operations may be performed step by step based on the operation sequences in the optimal execution plan to obtain the query result set.

S209: Generate, based on the fusion operator, an optimal execution plan related to the fusion operator.

In this embodiment, when the cost of executing the fusion operator is less than or equal to the cost of executing the group aggregation operator and the join operator, the optimal execution plan related to the fusion operator may be generated based on the fusion operator. The optimal execution plan describes operation sequences for executing the obtained SQL query statement.

S210: Perform operations step by step based on the operation sequences in the optimal execution plan related to the fusion operator, to obtain a query result set.

In this embodiment, after the optimal execution plan related to the fusion operator is obtained, the operations may be performed step by step based on the operation sequences in the optimal execution plan to obtain the query result set.

In this way, when the SQL query statement satisfies a corresponding feature, the join operation and the group aggregation operation may be combined into one operator, to reduce intermediate result processing flows, accelerate execution of the SQL query statement, and improve query execution performance. In addition, compared with a single operator, the fusion operator may use fewer memory and CPU resources, to reduce memory overheads and usage of CPU resources.

In some embodiments, the operation sequences in the optimal execution plan related to the fusion operator described in S209 may sequentially include: (1) building an ordered memory index; (2) probing the ordered memory index, calculating the aggregate function, and updating a match flag; and (3) determining a final result of the aggregate function based on the ordered memory index, to obtain the query result set. The following separately describes the three operation sequences. For a process of performing the three operation sequences, refer to the following descriptions. Details are not described herein.

### (1) Building the ordered memory index

During building of the ordered memory index, a table on a side of the join operation in the SQL query statement may be used as a build-side table, and the ordered memory index is built by using the build-side table. For example, the ordered memory index may be a B+ tree (B+-tree), or may be a skip list or another data structure. The ordered memory index may include a search key value, an aggregate function value, a key value count, and a match flag. The search key value is a join key value in the build-side table. The key value count is a quantity of times that the search key value appears in the build-side table. The match flag is used to identify whether the search key value successfully matches a join key value in a probe-side table. The probe-side table is a table on the other side of the join operation. The aggregate function value is a value obtained by calculating the aggregate function in the query statement. When the input parameter of the aggregate function is from the build-side table, the aggregate function value may include an aggregate function value related to the build-side table. When the input parameter of the aggregate function is from the probe-side table, the aggregate function value may include an aggregate function value related to the probe-side table.

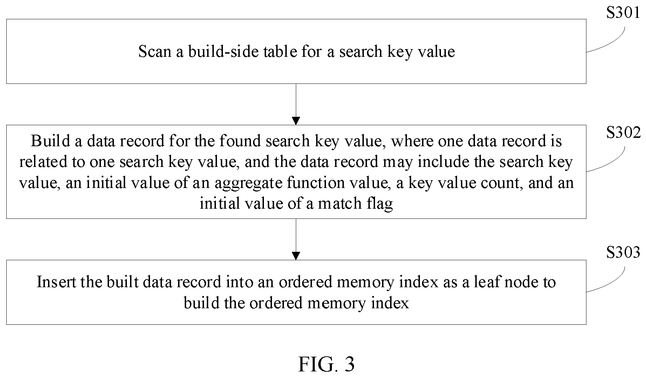

In a possible implementation, as shown in FIG. 3, building the ordered memory index may include the following steps. S301: Scan the build-side table for a search key value. To ensure that all index data can be stored in a memory, a table on a side occupying less memory may be selected as the build-side table. S302: Build a data record for the found search key value, where one data record is related to one search key value, and the data record may include the search key value, an initial value of an aggregate function value, a key value count, and an initial value of a match flag. S303: Insert the built data record into the ordered memory index as a leaf node to build the ordered memory index. For data records with duplicate search key values, only one data record is retained in a leaf node of the ordered memory index, but key value counts in the data records need to be accumulated. In addition, if the input parameter of the aggregate function in the query statement is from the build-side table, the aggregate function needs to be calculated while the data record is inserted into the ordered memory index, and the aggregate function value related to the build-side table needs to be updated. If the input parameter of the aggregate function is from the probe-side table, the aggregate function does not need to be calculated, and only the initial value is retained. In addition, data records may be sorted in the ordered memory index. Before data records are inserted into the ordered memory index, the data records may be first sorted based on search key values in the data records. Then the data records are sequentially inserted into the ordered memory index based on a sort result. Alternatively, data records may be first inserted into the ordered memory index, and then the data records may be sorted in the ordered memory index based on search key values in the data records. In this way, the build-side table is sorted.

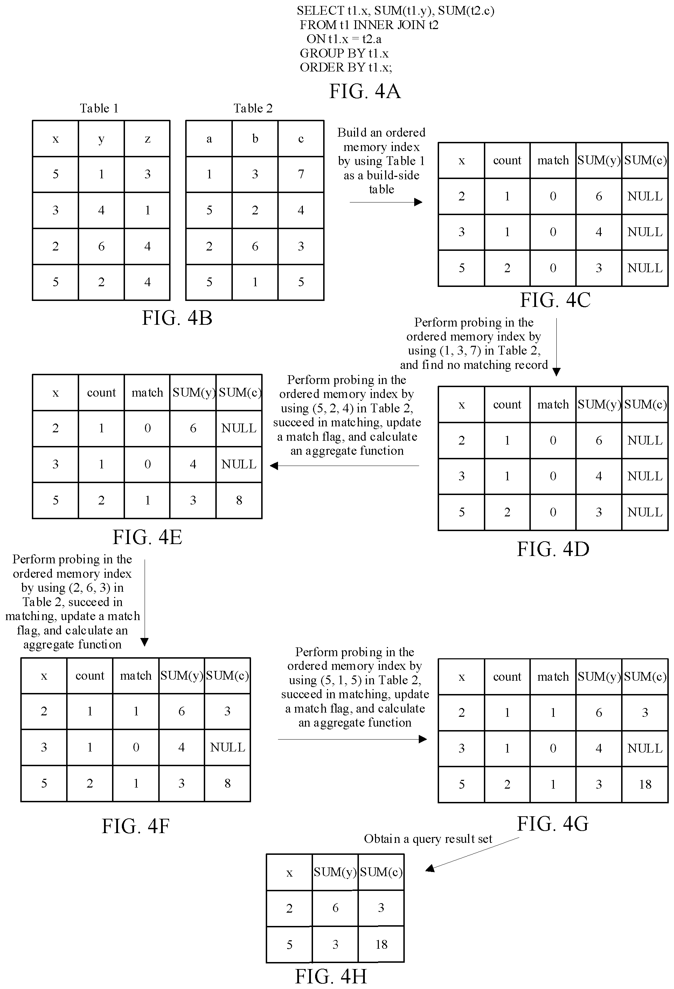

For example, refer to FIG. 4A to FIG. 4H. FIG. 4A shows an SQL query statement, and FIG. 4B shows Table 1 (to be specific, t1 described in FIG. 4A) and Table 2 (to be specific, t2 described in FIG. 4A). An ordered memory index shown in FIG. 4C may be obtained by building an ordered memory index by using Table 1 shown in FIG. 4B as a build-side table. A search key used during building of the ordered memory index is t1.x, and the ordered memory index is sorted based on search key values. In Table 1, a record with a join key value t1.x of 5 appears twice, and therefore a key value count (a count column) is 2; and a record with a join key value t1.x of 2 and a record with a join key value t1.x of 3 each appear once, and therefore key value counts are 1. An input parameter of an aggregate function SUM(t1.y) is from the build-side table (namely, Table 1). Therefore, a result may be directly obtained through calculation. An input parameter of SUM(t2.c) is from a probe-side table (namely, Table 2). Because a record value of Table 2 has not been obtained at this time, the aggregate function is set to an initial value, and is to be calculated during subsequent matching. A match identifier (a match column) indicates a result of join matching. Because matching has not been performed with Table 2, the match identifier is initialized to 0.

### (2) Probing the ordered memory index, calculating the aggregate function, and updating the match flag

In a process of probing the ordered memory index, calculating the aggregate function, and updating the match flag, a table on the other side of the join operation may be used as a probe-side table, the ordered memory index is probed by using a join key value in each record in the probe-side table, and an aggregate function value related to the probe-side table and the match identifier are updated in the ordered memory index based on a probe result. When a join key value in a record matches a search key value in the ordered memory index, an aggregate function in the probe-side table may be calculated based on a key value count of the search key value, and an aggregate function value related to the search key value and the join key value is updated. In addition, a match flag may also be updated (to be specific, marked as matched). When a join key value in a record matches none of search key values in the ordered memory index, a next record is further obtained for probing. In this way, both join matching and the group aggregation operation are implemented by using one ordered memory index.

For example, still refer to FIG. 4A to FIG. 4H. After the ordered memory index shown in FIG. 4C is built, the ordered memory index may be probed by using Table 2 as a probe-side table, an aggregate function is calculated, and a match flag is updated. A first record (1, 3, 7) in Table 2 may be first used for probing in the ordered memory index. Because a join key value 1 in the record does not exist in the ordered memory index, matching fails. In this case, the ordered memory index remains unchanged. Therefore, an ordered memory index shown in FIG. 4D is the same as the ordered memory index shown in FIG. 4C.

Then a second record (5, 2, 4) in Table 2 is used for probing in the ordered memory index. A join key value 5 in the record exists in the ordered memory index. Therefore, matching succeeds, and a match identifier may be updated, to be specific, the match identifier is updated from 0 to 1. In addition, the aggregate function SUM(t2.c) may be calculated, where a key value count in the ordered memory index needs to be used during the calculation, and an aggregate function value, in the ordered memory index, that is related to a search key value 5 is updated. The aggregate function value is as follows: SUM(t2.c) = 0 + 4 * 2 = 8. In this way, an ordered memory index shown in FIG. 4E can be obtained.

Then a third record (2, 6, 3) in Table 2 is used for probing in the ordered memory index. A join key value 2 in the record exists in the ordered memory index. Therefore, matching succeeds, and a match identifier may be updated, to be specific, the match identifier is updated from 0 to 1. In addition, the aggregate function SUM(t2.c) may be calculated, where a key value count in the ordered memory index needs to be used during the calculation, and an aggregate function value, in the ordered memory index, that is related to a search key value 2 is updated. The aggregate function value is as follows: SUM(t2.c) = 0 + 3 * 1 = 3. In this way, an ordered memory index shown in FIG. 4F can be obtained.

Finally, a fourth record (5, 1, 5) in Table 2 is used for probing in the ordered memory index. A join key value 5 in the record exists in the ordered memory index. Therefore, matching succeeds. In this case, a match identifier corresponding to the join key value 5 indicates matched, and therefore does not need to be updated. In addition, the aggregate function SUM(t2.c) may be calculated, where a key value count in the ordered memory index and a previously calculated aggregate function value need to be used during the calculation, and an aggregate function value, in the ordered memory index, that is related to a search key value 5 is updated. The aggregate function value is as follows: SUM(t2.c) = 8 + 5 * 2 = 18. In this way, an ordered memory index shown in FIG. 4G can be obtained.

### (3) Determining the final result of the aggregate function based on the ordered memory index, to obtain the query result set

After probing in the ordered memory index is completed, an execution result of the created fusion operator is stored in the ordered memory index. However, for some aggregate functions, further calculation may need to be performed to determine a final result. For example, when the aggregate function is the AVG function, division calculation further needs to be performed to obtain an average result. Finally, the query result set may be selected from the ordered memory index based on a join type in the SQL query statement. The query result set may be obtained by scanning leaf nodes in the ordered memory index. Because the leaf nodes in the ordered memory index are ordered, results in the obtained query result set are also ordered. Therefore, in some queries with a sort operation (for example, ORDER BY), the sort operation may be omitted, to reduce overheads of the sort operation and improve query efficiency. In some embodiments, in addition to the join operation and the group aggregation operation, the query statement may further include a sort operation (for example, ORDER BY). In this case, the fusion operator is further used to complete the sort operation. The sort operation is automatically completed during building of the ordered content index.

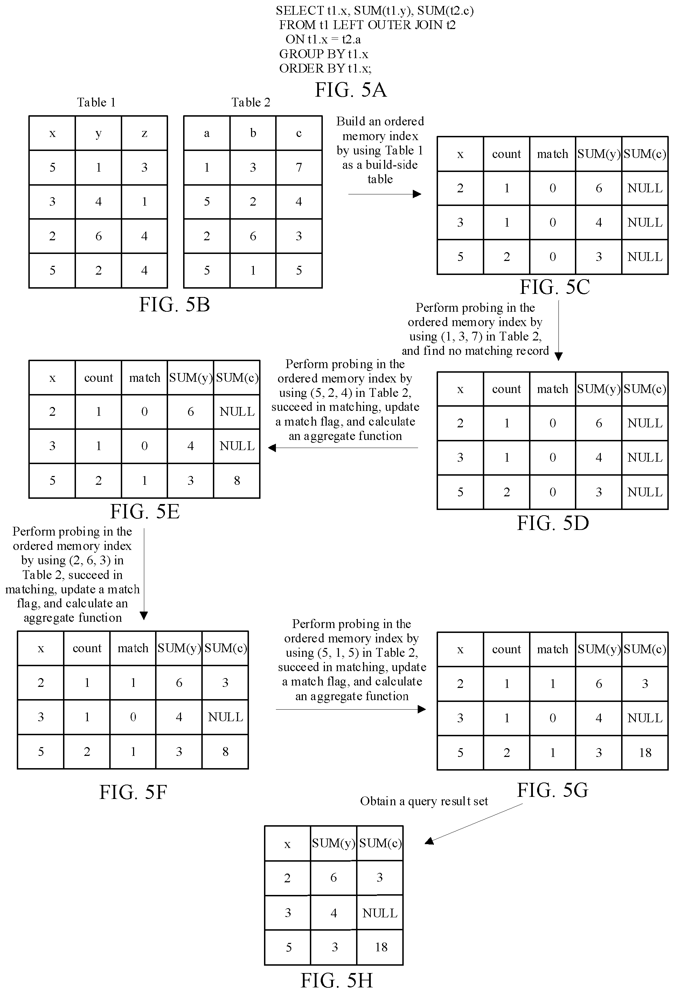

For example, still refer to FIG. 4A to FIG. 4H. In the case of the SQL query statement shown in FIG. 4A and the ordered memory index shown in FIG. 4G, the query result set may be shown in FIG. 4H. In addition, refer to FIG. 5A to FIG. 5H. In the case of an SQL query statement shown in FIG. 5A and an ordered memory index shown in FIG. 5G, the query result set may be shown in FIG. 5H. A main difference between FIG. 5A to FIG. 5H and FIG. 4A to FIG. 4H lies in different SQL query statements and different query result sets. For a process shown in FIG. 5A to FIG. 5H, refer to the descriptions of FIG. 4A to FIG. 4H. Details are not described herein again. It can be learned from FIG. 5A to FIG. 5H and FIG. 4A to FIG. 4H that, for SQL query statements with different join types but same other data, a needed query result set may be obtained by using a same fusion operator based on a match flag.

According to the foregoing descriptions of the operation sequences in the optimal execution plan related to the fusion operator, it can be learned that all of the operation sequences use a same physical data structure (namely, the ordered memory index). Therefore, temporal and spatial locality during execution of the fusion operator is better, and execution efficiency is higher. In addition, during execution of the fusion operator, only the build-side table needs to be sorted, and the probe-side table does not need to be sorted. This can avoid one sort operation with a high cost, to further improve query execution performance.

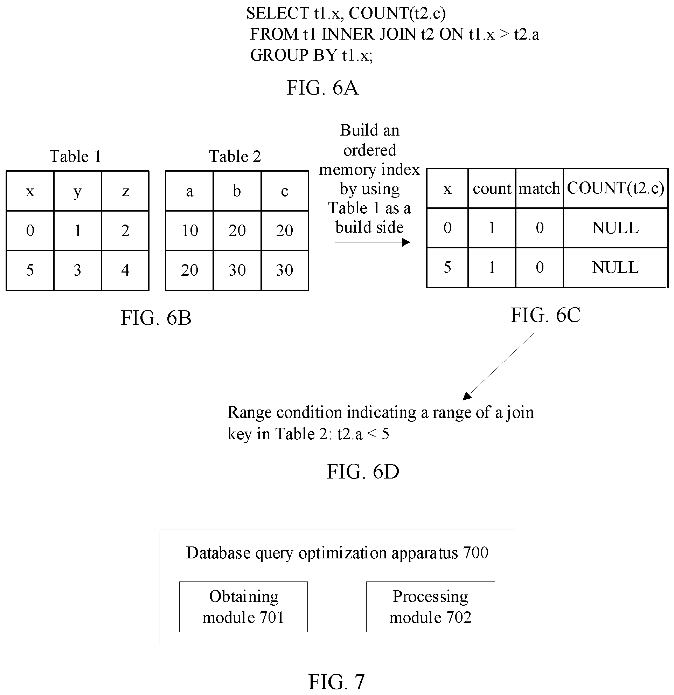

In addition, to further improve query execution performance, after the ordered memory index is built and before the ordered memory index is probed, a range condition may be further generated based on the join condition in the SQL query statement and a range of the search key value in the build-side table. The range condition may indicate a range of the join key value in the probe-side table. For example, refer to FIG. 6A to FIG. 6D. In the case of an SQL query statement shown in FIG. 6A and Table 1 (to be specific, t1 in FIG. 6A) and Table 2 (to be specific, t2 in FIG. 6A) that are shown in FIG. 6B, an ordered memory index shown in FIG. 6C may be built by using Table 1 as a build-side table. It can be learned from the ordered memory index shown in FIG. 6C that a minimum value of a join key value t1.x in Table 1 is 0, and a maximum value is 5, that is, t1.x >= 0 AND t1.x <= 5. As shown in FIG. 6D, after a range of the join key value in Table 1 is obtained, based on a join condition t1.x > t2.a shown in FIG. 6A, a range condition of a join key value in Table 2 may be obtained: t2.a < 5.

Further, during probing in the ordered memory index, when any record in the probe-side table is used for probing, whether a join key value in the record meets the generated range condition of the join key value in the probe-side table may be first determined. When the range condition is met, the join key value in the record may be used to probe the ordered memory index. When the range condition is not met, determining may be performed on a next record in the probe-side table. In this way, data can be filtered in advance before the ordered memory index is probed, to avoid unnecessary subsequent calculation and improve query execution performance. For example, still refer to FIG. 6. Join key values in Table 2 shown in FIG. 6B are 10 and 20. Both of the two values are greater than 5. To be specific, neither of the two values meets the range condition shown in FIG. 6D. Therefore, the ordered memory index does not need to be probed, in other words, execution may be ended in advance.

It should be understood that both the build-side table and the probe-side table described above may be physical tables (namely, base tables) stored in a database, or may be derived tables (for example, intermediate results in a view or a query process). This may be specifically determined based on an actual case, and is not limited herein.

It can be understood that sequence numbers of the steps in the foregoing embodiments do not mean an execution sequence. An execution sequence of processes should be determined based on functions and internal logic of the processes, and should not be construed as any limitation on implementation processes of embodiments of this application. In addition, the foregoing described embodiments may be combined based on an actual case, and a combined solution still falls within the protection scope of this application.

Based on the method in the foregoing embodiments, embodiments of this application provide a database query optimization apparatus.

For example, FIG. 7 is a diagram of a structure of a database query optimization apparatus according to an embodiment of this application. As shown in FIG. 7, the database query optimization apparatus 700 includes an obtaining module 701 and a processing module 702. The obtaining module 701 is configured to obtain a query statement, where the query statement includes a join operation and a group aggregation operation. The processing module 702 is configured to determine that a join key and a grouping key in the query statement are the same, an aggregate function in the query statement is splittable for calculation, and an input parameter of the aggregate function is from a same side of a join condition in the query statement. The processing module 702 is further configured to: create a fusion operator, where the fusion operator is used to complete the join operation and the group aggregation operation; and when a cost of executing the fusion operator is less than or equal to a target cost, generate, based on the fusion operator, an optimal execution plan related to the fusion operator, where the target cost is a cost of executing a join operator and a group aggregation operator, the join operator is used to complete the join operation, and the group aggregation operator is used to complete the group aggregation operation. In addition, the processing module 702 is further configured to perform operations step by step based on operation sequences in the optimal execution plan to obtain a query result set.

In some embodiments, when performing the operations step by step based on the operation sequences in the optimal execution plan to obtain the query result set, the processing module 702 is specifically configured to: build an ordered memory index by using a table on a first side in the join operation as a build-side table, where the ordered memory index includes a search key value, a key value count, a match flag, and an aggregate function value, the search key value is a join key value in the build-side table, the key value count is a quantity of times that the search key value appears in the build-side table, the match flag is used to identify whether the search key value successfully matches a join key value in a probe-side table, the probe-side table is a table on a second side in the join operation, the aggregate function value is a value obtained through calculation of the aggregate function in the query statement, and the aggregate function value includes an aggregate function value related to the build-side table and/or an aggregate function value related to the probe-side table; probe the ordered memory index by using the join key value in the probe-side table, and update, in the ordered memory index based on a probe result, the aggregate function value related to the probe-side table and the match identifier; and select the query result set from the ordered memory index based on a join type in the query statement.

In some embodiments, when building the ordered memory index by using the table on the first side in the join operation as the build-side table, the processing module 702 is specifically configured to: build a data record for each join key value in the build-side table, where the data record includes the search key value, an initial value of the aggregate function value, the key value count, and an initial value of the match flag; and insert the built data record into the ordered memory index to build the ordered memory index, where when a first data record and a second data record that are inserted into the ordered memory index are the same, the first data record or the second data record is retained, key value counts in the first data record and the second data record are accumulated, and when the input parameter of the aggregate function in the query statement is from the build-side table, an aggregate function value related to the first data record or the second data record is updated.

In some embodiments, when inserting the built data record into the ordered memory index, the processing module 702 is specifically configured to: sort data records based on search key values in the data records, and sequentially insert the data records into the ordered memory index based on a sort result; or insert data records into the ordered memory index, and sort the data records in the ordered memory index based on search key values in the data records.

In some embodiments, when probing the ordered memory index by using the join key value in the probe-side table, the processing module 702 is specifically configured to perform matching between a join key value in a first record in the probe-side table and the search key value in the ordered memory index, where the first record is any record in the probe-side table. In this case, updating, in the ordered memory index based on the probe result, the aggregate function value related to the probe-side table and the match identifier includes: when the join key value in the first record matches a first search key value in the ordered memory index, updating, in the ordered memory index, a match identifier related to the first search key value, and updating, based on a key value count related to the first search key value, an aggregate function value related to the first search key value and the join key value in the first record; or when the join key value in the first record does not match the first search key value in the ordered memory index, performing matching between a join key value in any remaining record in the probe-side table and the search key value in the ordered memory index.

In some embodiments, before probing the ordered memory index by using any join key value in the probe-side table, the processing module 702 is further configured to: generate a target range condition based on a range of the search key value in the ordered memory index and the join condition in the query statement, where the target range condition indicates a range of the join key value in the probe-side table; and determine that the any join key value meets the target range condition, where when the any join key value does not meet the target range condition, the any join key value is no longer used to probe the ordered memory index.

In some embodiments, both the build-side table and the probe-side table may be base tables or derived tables (for example, intermediate results in a view or a query process).

In some embodiments, the query statement further includes a sort operation. In this case, the fusion operator is further used to complete the sort operation.

In some embodiments, the join condition is used for an equi-join, or a non-equi join, or an equi-join and a non-equi join.

In some embodiments, both the obtaining module 701 and the processing module 702 shown in FIG. 7 may be implemented by using software or hardware. For example, the following describes an implementation of the obtaining module 701 by using the obtaining module 701 as an example. Similarly, for an implementation of the processing module 702, refer to the implementation of the obtaining module 701.

For example, the module is a software functional unit, and the obtaining module 701 may include code that is run on a compute instance. The compute instance may include at least one of a physical host (a compute device), a virtual machine, and a container. Further, there may be one or more compute instances. For example, the obtaining module 701 may include code that is run on a plurality of hosts, virtual machines, or containers. It should be noted that the plurality of hosts, virtual machines, or containers for running the code may be distributed in a same region (region) or different regions. Further, the plurality of hosts, virtual machines, or containers for running the code may be distributed in a same availability zone (availability zone, AZ) or different AZs. Each AZ includes one data center or a plurality of data centers that are geographically close to each other. Usually, one region may include a plurality of AZs.

Similarly, the plurality of hosts, virtual machines, or containers for running the code may be distributed in a same virtual private cloud (virtual private cloud, VPC) or a plurality of VPCs. Usually, one VPC is deployed in one region. A communication gateway needs to be deployed in each VPC for communication between two VPCs in a same region or between VPCs in different regions. The VPCs are interconnected through the communication gateway.

For example, the module is a hardware functional unit, and the obtaining module 701 may include at least one compute device, for example, a server. Alternatively, the obtaining module 701 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field programmable gate array, FPGA), a generic array logic (generic array logic, GAL), or any combination thereof.

A plurality of compute devices included in the obtaining module 701 may be distributed in a same region or different regions. The plurality of compute devices included in the obtaining module 701 may be distributed in a same AZ or different AZs. Similarly, the plurality of compute devices included in the obtaining module 701 may be distributed in a same VPC or a plurality of VPCs. The plurality of compute devices may be any combination of the following compute devices: a server, an ASIC, a PLD, a CPLD, an FPGA, a GAL, and the like.

It should be noted that, in another embodiment, the obtaining module 701 may be configured to perform any step of the database query optimization method described in the foregoing embodiments, and the processing module 702 may also be configured to perform any step of the database query optimization method described in the foregoing embodiments. Steps implemented by the obtaining module 701 and the processing module 702 may be specified as needed. The obtaining module 701 and the processing module 702 separately implement different steps of the database query optimization method described in the foregoing embodiments, to implement all functions of the database query optimization apparatus 700 shown in FIG. 7.

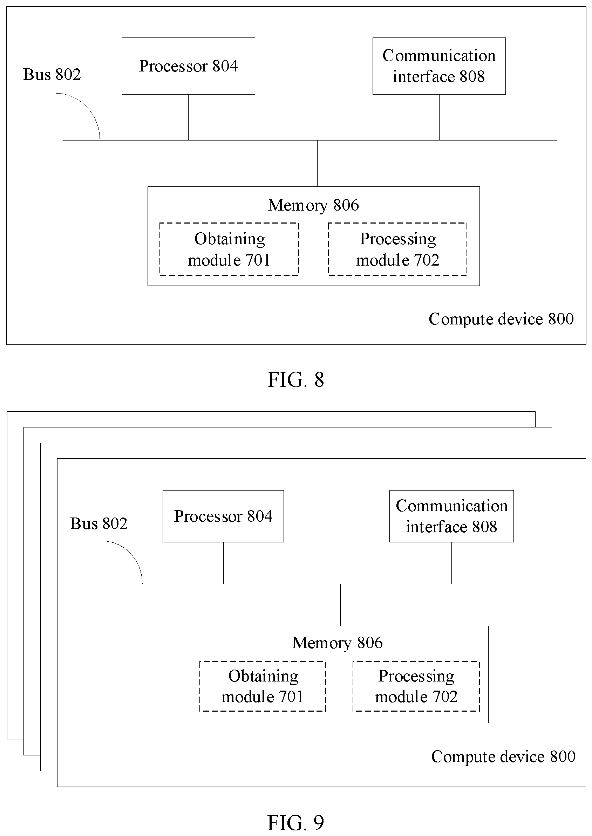

This application further provides a compute device 800. As shown in FIG. 8, the compute device 800 includes a bus 802, a processor 804, a memory 806, and a communication interface 808. The processor 804, the memory 806, and the communication interface 808 communicate with each other through the bus 802. The compute device 800 may be a server or a terminal device. It should be understood that quantities of processors and memories in the compute device 800 are not limited in this application.

The bus 802 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 8, but this does not mean that there is only one bus or only one type of bus. The bus 804 may include a path for transmitting information between the components (for example, the memory 806, the processor 804, and the communication interface 808) of the compute device 800.

The processor 804 may include any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 806 may include a volatile memory (volatile memory), for example, a random access memory (random access memory, RAM). Alternatively, the processor 804 may include a non-volatile memory (non-volatile memory), for example, a read-only memory (read-only memory, ROM), a flash memory, a hard disk drive (hard disk drive, HDD), or a solid-state drive (solid-state drive, SSD).

The memory 806 stores executable program code, and the processor 804 executes the executable program code to separately implement the functions of the obtaining module 701 and the processing module 702 shown in FIG. 7, to implement the database query optimization method described in the foregoing embodiments. That is, the memory 806 stores instructions for performing the database query optimization method described in the foregoing embodiments.

Alternatively, the memory 806 stores executable code, and the processor 804 executes the executable code to separately implement the functions of the database query optimization apparatus 700 shown in FIG. 7, to implement the database query optimization method described in the foregoing embodiments. That is, the memory 806 stores instructions for performing the database query optimization method described in the foregoing embodiments.

The communication interface 803 implements communication between the compute device 800 and another device or a communication network through a transceiver module, for example, but not limited to, a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 9, the compute device cluster includes at least one compute device 800. A memory 806 in one or more compute devices 800 in the compute device cluster may store same instructions for performing the database query optimization method described in the foregoing embodiments.

In some possible implementations, a memory 806 in one or more compute devices 800 in the compute device cluster may alternatively respectively store some of instructions for performing the database query optimization method described in the foregoing embodiments. In other words, a combination of one or more compute devices 800 may jointly execute instructions for performing the database query optimization method described in the foregoing embodiments.

It should be noted that memories 806 in different compute devices 800 in the compute device cluster may store different instructions for performing some functions of the database query optimization apparatus 700 shown in FIG. 7. In other words, instructions stored in memories 806 in different compute devices 800 may implement functions of one or more of the obtaining module 701 and the processing module 702.

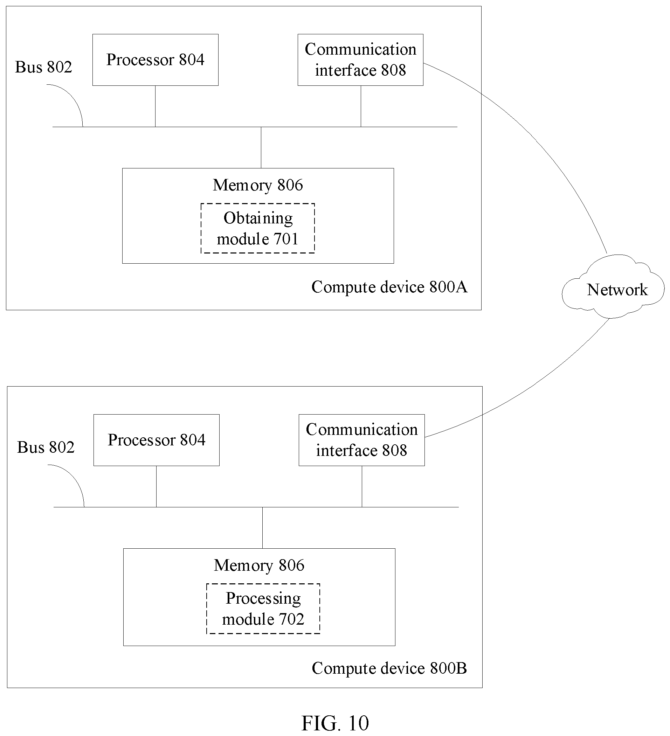

In some possible implementations, one or more compute devices in the compute device cluster may be connected through a network. The network may be a wide area network, a local area network, or the like. FIG. 10 shows a possible implementation. As shown in FIG. 10, two compute devices 800A and 800B are connected through a network. Specifically, each compute device is connected to the network through a communication interface of the compute device. In this possible implementation, a memory 806 in the compute device 800A stores instructions for performing the functions of the obtaining module 701. In addition, a memory 806 in the compute device 800B stores instructions for performing the functions of the processing module 702.

It should be understood that functions of the compute device 800A shown in FIG. 10 may alternatively be performed by a plurality of compute devices 800. Similarly, functions of the compute device 800B may alternatively be performed by a plurality of compute devices 800.

An embodiment of this application further provides another compute device cluster. For a connection relationship between compute devices in the compute device cluster, refer to the connection manner in the compute device cluster in FIG. 9 and FIG. 10. A difference lies in that a memory 806 in one or more compute devices 800 in the compute device cluster may store same instructions for performing the method in the foregoing embodiments.

In some possible implementations, a memory 806 in one or more compute devices 800 in the compute device cluster may alternatively respectively store some of instructions for performing the database query optimization method. In other words, a combination of the one or more compute devices 800 may jointly execute instructions for performing the database query optimization method.

Based on the method in the foregoing embodiments, an embodiment of this application provides a computer-readable storage medium. The computer-readable storage medium stores a computer program. When the computer program is run on a compute device cluster including at least one compute device, the compute device cluster is enabled to perform the method described in the foregoing embodiments. For example, the computer-readable storage medium may be any usable medium that can be stored on a compute device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like.

Based on the method in the foregoing embodiments, an embodiment of this application provides a computer program product including instructions. When the computer program product is run on a compute device cluster including at least one compute device, the compute device cluster is enabled to perform the method in the foregoing embodiments.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by a processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instruction is loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It can be understood that various numbers in embodiments of this application are merely intended for differentiation for ease of description, but not to limit the scope of embodiments of this application.

Finally, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions in embodiments of this application.

## Claims

1. A database query optimization method, comprising:
obtaining a query statement, wherein the query statement comprises a join operation and a group aggregation operation;
determining that a join key and a grouping key in the query statement are the same, an aggregate function in the query statement is splittable for calculation, and an input parameter of the aggregate function is from a same side of a join condition in the query statement;
creating a fusion operator, wherein the fusion operator is used to complete the join operation and the group aggregation operation;
when a cost of executing the fusion operator is less than or equal to a target cost, generating, based on the fusion operator, an optimal execution plan related to the fusion operator, wherein the target cost is a cost of executing a join operator and a group aggregation operator, the join operator is used to complete the join operation, and the group aggregation operator is used to complete the group aggregation operation; and
performing operations step by step based on operation sequences in the optimal execution plan to obtain a query result set.

2. The method according to claim 1, wherein performing the operations step by step based on the operation sequences in the optimal execution plan to obtain the query result set comprises:
building an ordered memory index by using a table on a first side in the join operation as a build-side table, wherein the ordered memory index comprises a search key value, a key value count, a match flag, and an aggregate function value, the search key value is a join key value in the build-side table, the key value count is a quantity of times that the search key value appears in the build-side table, the match flag is used to identify whether the search key value successfully matches a join key value in a probe-side table, the probe-side table is a table on a second side in the join operation, the aggregate function value is a value obtained through calculation of the aggregate function in the query statement, and the aggregate function value comprises an aggregate function value related to the build-side table and/or an aggregate function value related to the probe-side table;
probing the ordered memory index by using the join key value in the probe-side table, and updating, in the ordered memory index based on a probe result, the aggregate function value related to the probe-side table and the match identifier; and
selecting the query result set from the ordered memory index based on a join type in the query statement.

3. The method according to claim 2, wherein building the ordered memory index by using the table on the first side in the join operation as the build-side table comprises:
building a data record for each join key value in the build-side table, wherein the data record comprises the search key value, an initial value of the aggregate function value, the key value count, and an initial value of the match flag; and
inserting the built data record into the ordered memory index to build the ordered memory index, wherein
when a first data record and the second data record that are inserted into the ordered memory index are the same, the first data record or the second data record is retained, key value counts in the first data record and the second data record are accumulated, and when the input parameter of the aggregate function in the query statement is from the build-side table, an aggregate function value related to the first data record or the second data record is updated.

4. The method according to claim 3, wherein inserting the built data record into the ordered memory index comprises:
sorting the data records based on search key values in the data records, and sequentially inserting the data records into the ordered memory index based on a sort result; or
inserting the data records into the ordered memory index, and sorting the data records in the ordered memory index based on search key values in the data records.

5. The method according to any one of claims 2 to 4, wherein probing the ordered memory index by using the join key value in the probe-side table comprises:
performing matching between a join key value in a first record in the probe-side table and the search key value in the ordered memory index, wherein the first record is any record in the probe-side table; and
updating, in the ordered memory index based on the probe result, the aggregate function value related to the probe-side table and the match identifier comprises:
when the join key value in the first record matches a first search key value in the ordered memory index, updating, in the ordered memory index, a match identifier related to the first search key value, and updating, based on a key value count related to the first search key value, an aggregate function value related to the first search key value and the join key value in the first record; or
when the join key value in the first record does not match the first search key value in the ordered memory index, performing matching between a join key value in any remaining record in the probe-side table and the search key value in the ordered memory index.

6. The method according to any one of claims 2 to 5, wherein before probing the ordered memory index by using any join key value in the probe-side table, the method further comprises:
generating a target range condition based on a range of the search key value in the ordered memory index and the join condition in the query statement, wherein the target range condition indicates a range of the join key value in the probe-side table; and
determining that the any join key value meets the target range condition, wherein when the any join key value does not meet the target range condition, the any join key value is no longer used to probe the ordered memory index.

7. The method according to any one of claims 2 to 6, wherein both the build-side table and the probe-side table may be base tables or derived tables.

8. The method according to any one of claims 1 to 7, wherein the query statement further comprises a sort operation, and the fusion operator is further used to complete the sort operation.

9. The method according to any one of claims 1 to 8, wherein the join condition is used for an equi-join and a non-equi join.

10. A database query optimization apparatus, comprising:
an obtaining module, configured to obtain a query statement, wherein the query statement comprises a join operation and a group aggregation operation; and
a processing module, configured to determine that a join key and a grouping key in the query statement are the same, an aggregate function in the query statement is splittable for calculation, and an input parameter of the aggregate function is from a same side of a join condition in the query statement, wherein
the processing module is further configured to create a fusion operator, wherein the fusion operator is used to complete the join operation and the group aggregation operation;
the processing module is further configured to: when a cost of executing the fusion operator is less than or equal to a target cost, generate, based on the fusion operator, an optimal execution plan related to the fusion operator, wherein the target cost is a cost of executing a join operator and a group aggregation operator, the join operator is used to complete the join operation, and the group aggregation operator is used to complete the group aggregation operation; and
the processing module is further configured to perform operations step by step based on operation sequences in the optimal execution plan to obtain a query result set.

11. The apparatus according to claim 10, wherein when performing the operations step by step based on the operation sequences in the optimal execution plan to obtain the query result set, the processing module is specifically configured to:
build an ordered memory index by using a table on a first side in the join operation as a build-side table, wherein the ordered memory index comprises a search key value, a key value count, a match flag, and an aggregate function value, the search key value is a join key value in the build-side table, the key value count is a quantity of times that the search key value appears in the build-side table, the match flag is used to identify whether the search key value successfully matches a join key value in a probe-side table, the probe-side table is a table on a second side in the join operation, the aggregate function value is a value obtained through calculation of the aggregate function in the query statement, and the aggregate function value comprises an aggregate function value related to the build-side table and/or an aggregate function value related to the probe-side table;
probe the ordered memory index by using the join key value in the probe-side table, and update, in the ordered memory index based on a probe result, the aggregate function value related to the probe-side table and the match identifier; and
select the query result set from the ordered memory index based on a join type in the query statement.

12. The apparatus according to claim 11, wherein when building the ordered memory index by using the table on the first side in the join operation as the build-side table, the processing module is specifically configured to:
build a data record for each join key value in the build-side table, wherein the data record comprises the search key value, an initial value of the aggregate function value, the key value count, and an initial value of the match flag; and
insert the built data record into the ordered memory index to build the ordered memory index, wherein
when a first data record and the second data record that are inserted into the ordered memory index are the same, the first data record or the second data record is retained, key value counts in the first data record and the second data record are accumulated, and when the input parameter of the aggregate function in the query statement is from the build-side table, an aggregate function value related to the first data record or the second data record is updated.

13. The apparatus according to claim 12, wherein when inserting the built data record into the ordered memory index, the processing module is specifically configured to:
sort the data records based on search key values in the data records, and sequentially inserting the data records into the ordered memory index based on a sort result; or
insert the data records into the ordered memory index, and sorting the data records in the ordered memory index based on search key values in the data records.

14. The apparatus according to any one of claims 11 to 13, wherein when probing the ordered memory index by using the join key value in the probe-side table, the processing module is specifically configured to:
perform matching between a join key value in a first record in the probe-side table and the search key value in the ordered memory index, wherein the first record is any record in the probe-side table; and
updating, in the ordered memory index based on the probe result, the aggregate function value related to the probe-side table and the match identifier comprises:
when the join key value in the first record matches a first search key value in the ordered memory index, updating, in the ordered memory index, a match identifier related to the first search key value, and updating, based on a key value count related to the first search key value, an aggregate function value related to the first search key value and the join key value in the first record; or
when the join key value in the first record does not match the first search key value in the ordered memory index, performing matching between a join key value in any remaining record in the probe-side table and the search key value in the ordered memory index.

15. The apparatus according to any one of claims 11 to 14, wherein before probing the ordered memory index by using any join key value in the probe-side table, the processing module is further configured to:
generate a target range condition based on a range of the search key value in the ordered memory index and the join condition in the query statement, wherein the target range condition indicates a range of the join key value in the probe-side table; and
determine that the any join key value meets the target range condition, wherein when the any join key value does not meet the target range condition, the any join key value is no longer used to probe the ordered memory index.

16. The apparatus according to any one of claims 11 to 15, wherein both the build-side table and the probe-side table may be base tables or derived tables.

17. The apparatus according to any one of claims 10 to 16, wherein the query statement further comprises a sort operation, and the fusion operator is further used to complete the sort operation.

18. The apparatus according to any one of claims 10 to 17, wherein the join condition is used for an equi-join and a non-equi join.

19. A compute device cluster, comprising at least one compute device, wherein each compute device comprises a processor and a memory, wherein
a processor of the at least one compute device is configured to execute instructions stored in a memory of the at least one compute device, to enable the compute device cluster to perform the method according to any one of claims 1 to 9.

20. A computer-readable storage medium, wherein the computer-readable storage medium stores a computer program, and when the computer program is run on a compute device cluster comprising at least one compute device, the compute device cluster is enabled to perform the method according to any one of claims 1 to 9.

21. A computer program product, wherein when the computer program product is run on a compute device cluster comprising at least one compute device, the compute device cluster is enabled to perform the method according to any one of claims 1 to 9.
